# EUROPÄISCHE PATENTSCHRIFT

(11) **EP 0 740 138 B1**
(45) Veröffentlichungstag und Bekanntmachung des Hinweises auf die Patenterteilung: **09.09.1998**
(21) Anmeldenummer: 96105984.7
(22) Anmeldetag: 17.04.1996
(51) Int. Cl.: G01L 3/10, G01L 3/04, A21C 1/14, B01F 7/08, B29B 7/18, B29B 7/20, B29B 7/28, B29B 7/46, B29B 7/48, B29C 47/36, B29C 47/38

(54) **Einrichtung zur Messung des Drehmomenteintrages bei Mehrwellenextrudern**
Arrangement for measuring the torque input of a multi-screw extruder
Dispositif de mesure du couple d'entrée d'une extrudeuse à plusieurs vis

(30) Priorität: 25.04.1995 DE 19515130
(43) Veröffentlichungstag der Anmeldung: 30.10.1996
(73) Patentinhaber: Krupp Werner & Pfleiderer GmbH, 70469 Stuttgart (DE)
(72) Erfinder: Schäfer, Manfred, Dipl.-Ing., 71701 Schwieberdingen (DE); Buchheit, Dieter, 71735 Eberdingen (DE)
(74) Vertreter: Rau, Manfred, Dr. Dipl.-Ing.

(56) Entgegenhaltungen:
- EP-A- 0 159 825
- EP-A- 0 570 066
- DE-C- 4 229 569
- US-A- 4 541 270
- PATENT ABSTRACTS OF JAPAN vol. 018, no. 514 (M-1680), 28.September 1994 & JP 06 179212 A (KOBE STEEL LTD), 28.Juni 1994

## Beschreibung

Die Erfindung betrifft eine Einrichtung zum Messen des Drehmomentes jeder einzelnen Schneckenwelle eines zwei- oder mehrwelligen Extruders.

Der wirtschaftliche Zwang zu immer höheren Durchsatzleistungen bei zwei- oder mehrwelligen Schneckenextrudem erfordert immer höhere Antriebsleistungen und damit höhere Schneckenwellendrehmomente. Die ebenfalls immer optimalere Verfahrenstechnik ermöglicht einen Dauerbetrieb der Maschine bei nahezu 100 %.

Aufgrund dieser Anforderungen können Schneckenwellen nur noch mit sehr geringen Festigkeitssicherheitswerten eingesetzt werden. Der Bruch einer Schneckenwelle bei mehrwelligen Maschinen verursacht nicht nur Produktionsausfall sondem auch erhebliche Folgeschäden im Verfahrensteil und im Getriebe. Außerdem ist die Leistungsaufteilung auf mehrere Schneckenwellen nicht gleichmäßig. Bei zweiwellig gleichlaufenden, rechtssteigenden Schneckenwellen wird die linke Welle - in Förderrichtung gesehen -höher belastet. Aus diesem Grunde ist eine sehr genaue Drehmomentüberwachung jeder einzelnen Schneckenwelle erforderlich.

Aus der EP 0457086 B1 ist eine berührungslose Messung des lokalen Drehmomenteintrages an Schneckenmaschinen bekannt. Hierfür sind im Schneckengehäuse mehrere Wegsensoren angeordnet, die während des Umlaufs der Schneckenwelle die Schneckenwellenoberfläche abtasten. Für eine bessere Abtastung sind die Schneckenwellen mit Kerben oder Nuten versehen. Zusätzlich ist hierbei außerhalb des Schneckengehäuses an der Kupplung zum Antrieb eine gesonderte Meßeinheit angebracht, welche einen Bezugsimpuls von einer Stelle der Schneckenmaschine liefert, an der die Welle noch keine Torsion aufweist. Dieses Bezugsignal wird mit den im Gehäuse ermittelten Signalen über einen Rechner ausgewertet. Dieses aufwendige Meßverfahren ist für mehrwellige Schneckenmaschinen nicht einsetzbar und dürfte selbst bei einwelligen Schneckenmaschinen bei der Verarbeitung von zähflüssigen Kunststoffmassen kaum praxiswirksam anwendbar sein.
Außerdem können hiermit nur drehende Wellen überwacht werden, eine blockierende Welle ist damit nicht erfaßbar.

Die Bestimmung des Drehmomenteintrags mittels aufgeklebter Dehnungsmeßstreifen auf einer drehenden Welle ist allgemein bekannter Stand der Technik.

Gemäß US 4 541 270 ist ein Mehrwellenextruder bekannt, bei dem ein Drehmomentmeßgerät auf einer Kupplungshülse zwischen einer Getriebeabtriebswelle und einer Schneckeneingangswelle angebracht ist. Zur Messung des übertragenen Drehmoments dient ein konventionelles Drehmomentmeßgerät. Nachteilig ist, daß dieses unförmig und groß ist und es deshalb unmöglich ist, bei Mehrwellenextrudern mit mehreren Schneckeneingangswellen, die unmittelbar benachbart sind, mehrere Drehmomentmeßgeräte vorzusehen. Es ist jedoch von großer Bedeutung, die auf die einzelnen Schneckeneingangswellen übertragenen Drehmomente zu messen, um ein mögliches Brechen dieser Wellen zu verhindern, was häufig zu weiteren Zerstörungen innerhalb des Extruders führt.

Aus JP 06 179 212 A ist eine Steuervorrichtung für Mischmaschinen bekannt. Danach soll verhindert werden, daß angetriebene Schraubenwellen durch zu hohe Drehmomente Schaden nehmen. Deshalb wird das auf die Schraubenwellen übertragene Drehmoment telemetrisch gemessen, d. h. durch ein auf den Schraubenwellen vorgesehenes Drehmomentdetektiergerät, welches Signale an eine die Welle zylindrisch umgebende Antenne gibt. Entsprechend der übermittelten Information wird das auf die Schraubenwelle gegebene Drehmoment geändert. Da das Drehmomentdetektiergerät auf einem Teil der Welle vorgesehen ist, der das Drehmoment überträgt, wird das Gerät bei der Drehmomentübertragung tordiert und u. U. beschädigt.

Gemäß DE 42 29 569 C ist ein Werkzeug mit telemetrisch überwachter Welle bekannt. Hierbei sind ein Sensorelement, ein Sensorsignalverstärker und eine Kuppelantenne auf einer Welle montiert. Ferner ist eine mit einer Auswert- und Anzeigeeinheit verbundene stationäre Sende-/Empfangsantenne vorhanden. Die Welle weist einen ersten Wellenabschnitt und einen benachbarten zweiten Wellenabschnitt mit gegenüber dem ersten verringertem Durchmesser auf. Das Sensorelement ist auf dem zweiten Wellenabschnitt befestigt, wobei der erste und zweite Wellenabschnitt von einem zwei Halbschalen aufweisenden Hüllkörper umgeben sind, der sich auf dem ersten Wellenabschnitt abstützt. Somit sind auch hier die auf der Welle vorgesehenen Datenübertragungseinrichtungen, d. h. Sensorsignalverstärker und Kuppelantenne den Torsionen der Welle durch die Drehmomentübertragung ausgesetzt.

Nach EP 0 159 825 A ist eine Vorrichtung zur Messung eines in einer Welle übertragenen Drehmoments bekannt. Dazu wird auf der Welle ein zylindrischer Hohlkörper vorgesehen, der an seinen Enden mit der Welle verschweißt ist. Auf der Außenwand des Zylinders ist ein Spannungsmeßgeber vorgesehen, der elektrische Signale an Windungen gibt, die die Enden des Zylinders umgeben und deren Informationsübertragung einem mit der Welle nicht verbundenen Empfänger dienen. Wenn ein Drehmoment auf die Welle wirkt, so wird ein Teil davon auf den Zylinder übertragen, was erforderlich ist, damit die Drehmomentmeßvorrichtung funktionieren kann. Somit sind jedoch alle mit der Welle verbundenen Einrichtungen zur Messung des Drehmoments Torsionen unterworfen, die zu Beschädigungen führen können.

Aus EP 0 570 066 A ist ein Dehnungstransformator zur Drehmomentmessung einer zylindrischen Welle bekannt. Dieser besteht aus einem mit der Welle rotierenden Meßwertaufnehmer und mindestens einem Meßfühler zur Umwandlung einer drehmomentabhängigen Verformung der Welle in ein auswert- und anzeigbares Signal, wobei der Meßwertaufnehmer axial ausgerichtet auf der Mantelfläche der Welle angeordnet ist und in axialer Richtung Randabschnitte aufweist, welche die Verformung der Welle übertragend auf deren Mantelfläche befestigt sind. Des weiteren weist der Meßwertaufnehmer zwischen diesen Randabschnitten mindestens einen Abschnitt mit verringertem Querschnitt auf, der einen Meßfühler für die Verformung trägt. Wie bei EP 0 159 825 A sind bei der Torsion der Welle alle Teile des diese umgebenen Zylinders bei der Drehmomentübertragung Torsionen unterworfen, was für die mit der Welle verbundene Elektronik nachteilig ist.

Folglich liegt der Erfindung die Aufgabe zugrunde, bei Mehrwellenextrudern mit mindestens zwei Schneckeneingangswellen das Drehmoment jeder einzelnen Welle möglichst einfach zu messen.

Diese Aufgabe wird erfindungsgemäß nach den Merkmalen des Anspruches 1 gelöst. Mit der erfindungsgemäßen Ausbildung der Verbindungshülse zwischen Getriebeabtriebswellen und Schneckeneingangswellen für einen mehrwelligen Schneckenextruder ist es überraschend gelungen, die bekannten Dehnungsmeßstreifen mit Signalverstärker und Ringantenne auf ein vorhandenes und einfach austauschbares Bauteil unterzubringen.

In Weiterbildung der Erfindung nach den Merkmalen des Anspruches 2 kann die Überwachung auch bei Maschinen, bei denen der Abstand der Verbindungshülsen zueinander unter 1 mm beträgt, eingesetzt werden.

Ein weiterer Vorteil der Erfindung besteht darin, daß bei bereits allen in der Praxis eingesetzten mehrwelligen Schneckenextrudem durch einfaches Auswechseln der Verbindungshülse eine Drehmomentüberwachung der einzelnen Wellen realisierbar ist.

Im folgenden wird die Erfindung anhand eines in der Zeichnung dargestellten Ausführungsbeispieles näher erläutert. Es zeigen
Figur 1 - den schematischen Aufbau einer zweiwelligen Schneckenmaschine,
Figur 2 - eine erfindungsgemäß ausgerüstete Verbindungshülse

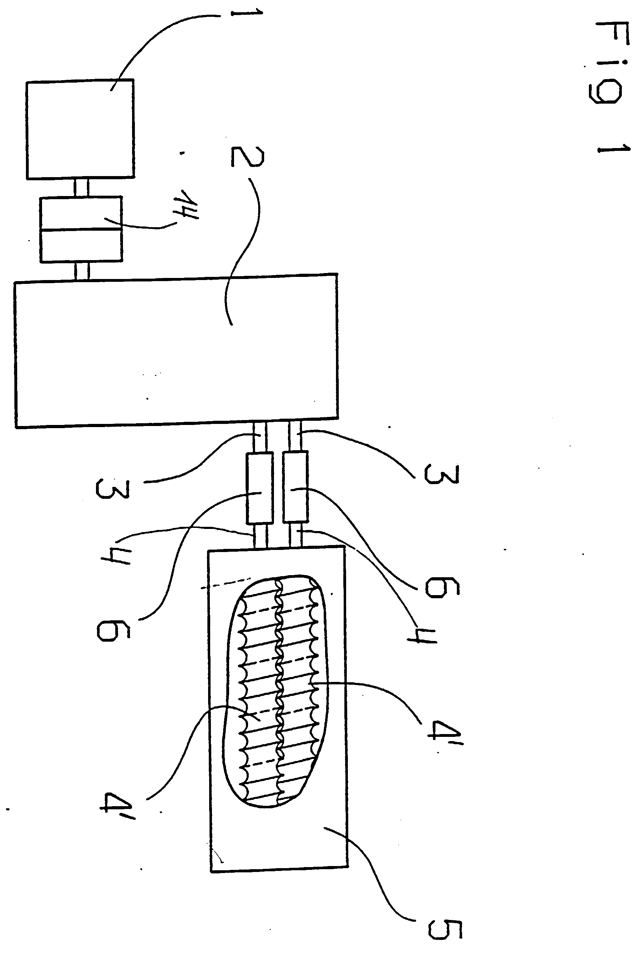

In der Figur 1 ist der elektrische Antriebsmotor 1 über eine Kupplung 14 mit dem Getriebe 2 verbunden. Die Getriebeabtriebswellen 3 sind über Verbindungshülsen 6 kraftschlüssig mit den Schneckeneingangswellen 4 verbunden. Die im Schneckengehäuse 5 auf die Schneckenwelle 4 aufgesteckten Schneckenelemente sind mit 4' bezeichnet.

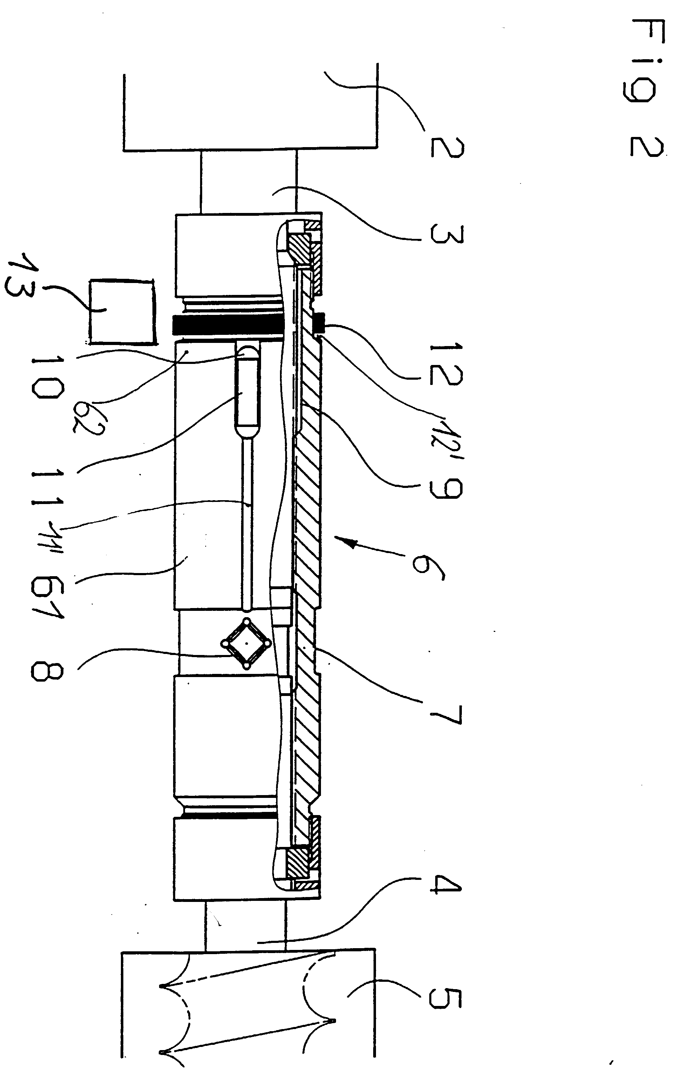

Wie aus der Figur 2 erkennbar ist, besteht die Verbindungshülse 6 aus einem das Drehmoment übertragenden Teil 61 und einem drehmomentfreien Teil 62. Der Innendurchmesser des drehmomentfreien Teils 62, der Kupplungshülse 6 ist vergrößert ausgeführt, d.h. hier besteht keine kraftschlüssige Verbindung mit der nicht dargestellten Verzahnung der Getriebeabtriebswellen 3. Im den Drehmoment übertragenden Teil 61 sind die Dehnmeßstreifen 8 in einer flachen Nut 7 aufgeklebt. Diese flache Nut 7 ist dann erforderlich, wenn wie es oft der Fall ist, die Verbindungshülsen 6 zueinander einen Abstand unter 1 mm haben.

Von der radialen Nut 7 des Teiles 61 verläuft eine axiale Nut 10 bis zu einer weiteren radialen Nut 12' des Teiles 62. In der radialen Nut 12' ist die Ringantenne 12 angeordnet. In unmittelbar Nähe der Ringantenne 12 ist die Empfangsantenne 13 angeordnet. In der axialen Nut 10 ist ein Meßwertverstärker 11, der über die Leitung 11' die Dehnmeßstreifen 8 mit der Ringantenne 12 verbindet, angeordnet. Über die Empfangsantenne 13, die an dem Maschinengestell (in der Zeichnung nicht gezeigt) befestigt ist, werden die von der Ringantenne 12 abgegebenen Signale aufgenommen und zu einem nicht gezeigten Grenzwertgeber oder Rechner geleitet.

Da jede Verbindungshülse 6 einer mehrwelligen Schneckenmaschine mit dem erfindungsgemäßen Meßsystem ausgerüstet ist, kann exakt der Drehmomenteintrag jeder einzelnen Welle überwacht werden. Dieses außerhalb des Schneckengehäuses 5 angeordnete Meßsystem wird durch die Produktaufbereitung nicht beeinflußt und ermöglicht auch die Messung des Drehmoments an einer blockierenden Welle.

Da das erfindungsgemäße Meßsystem in ein bereits vorhandenes Bauteil integriert ist, welches nur geringfügige Veränderung erfahren hat, ist eine Austauschbarkeit des Meßsystems jederzeit gegeben und ein weiterer Vorteil kann darin gesehen werden, daß bestehende Maschinen auf einfache Weise nachrüstbar sind.

## Patentansprüche

1. Einrichtung zur Messung des Drehmomenteintrages mittels Dehnungsmeßstreifen (8), Signalverstärker (11) und Ringantenne (12) bei Mehrwellenextrudern, bei denen die Getriebeabtriebswellen (3) über Verbindungshülsen (6) kraftschlüssig mit Schneckeneingangswellen (4) eines Extruders (5) verbunden sind, wobei
a) jede Verbindungshülse (6) aus
- einem ersten Teil (61), der in drehmomentübertragender Weise mit einer Getriebeabtriebswelle (3) und einer Schneckeneingangswelle (4) verbunden ist, und
- einem zweiten Teil (62), der mit dem ersten Teil (61) verbunden ist und keine drehmomentübertragende Verbindung mit der Getriebeabtriebswelle (3) aufweist, besteht und
b) auf dem ersten Teil (61) die Dehnungsmeßstreifen (8) aufgeklebt sind und auf dem zweiten Teil (62) der Signalverstärker (11) und die Ringantenne (12) angeordnet sind.

2. Einrichtung nach Anspruch 1, **dadurch gekennzeichnet, daß** das erste Teil (61) für die Aufnahme der Dehnungsmeßstreifen (8) mit einer Ringnut (7) versehen ist und das zweite Teil (62) mit einer Ringnut (12') für die Aufnahme der Ringantenne (12) sowie mit einer Axialnut (10) für die Aufnahme des Meßverstärkers (11) ausgerüstet ist.

## Claims

1. Device for measuring the torque input by means of a wire strain gauge (8), signal amplifier (11) and circular antenna (12) in multi-shaft extruders, in which the gear output shafts (3) are non-positively connected with screw inlet shafts (4) of an extruder (5) via connecting sleeves (6),
a) each connecting sleeve (6) comprising
- a first part (61) connected for torque transmission with a gear output shaft (3) and a screw inlet shaft (4), and
- a second part (62) which is connected with the first part (61) and has no connection, for torque transmission, with the gear output shaft (3), and
b) the wire strain gauges (8) being glued on the first part (61) and the signal amplifier (11) and the circular antenna (12) being disposed on the second part (62).

2. Device according to claim 1, **characterized in that** the first part (61) is provided with an annular groove (7) for the location of the wire strain gauges (8), and the second part (62) is equipped with an annular groove (12') for the location of the circular antenna (12) as well as with an axial groove (10) for the location of the signal amplifier (11).

## Revendications

1. Dispositif de mesure de couples d'entrée, au moyen de jauges extensométriques (8), d'un amplificateur de signaux (11) et d'une antenne annulaire (12), dans des extrudeuses à arbres multiples dans lesquelles les arbres de sortie de transmission (3) sont en liaison mécanique, par l'intermédiaire de douilles de solidarisation (6), avec des arbres d'entrée (4) des vis sans fin d'une extrudeuse (5), dispositif dans lequel
a) chaque douille de solidarisation (6) se compose
- d'une première partie (61) en liaison avec un arbre de sortie de transmission (3) et avec un arbre d'entrée (4) d'une vis sans fin, d'une manière répercutant les couples de rotation, et
- d'une seconde partie (62) reliée à la première partie (61) et ne présentant, avec l'arbre de sortie de transmission (3), aucune liaison de répercussion de couples de rotation, et
b) les jauges extensométriques (8) sont collées sur la première partie (61), et l'amplificateur de signaux (11) et l'antenne annulaire (12) sont placés sur la seconde partie (62).

2. Dispositif selon la revendication 1, caractérisé par le fait que la première partie (61) est pourvue d'une saignée annulaire (7) en vue de recevoir les jauges extensométriques (8), et la seconde partie (62) est dotée d'une saignée annulaire (12') en vue de recevoir l'antenne annulaire (12), ainsi que d'une rainure axiale (10) en vue de recevoir l'amplificateur de mesure (11).
